# EUROPEAN PATENT SPECIFICATION

(11) **EP 2 016 344 B1**
(45) Date of publication and mention of the grant of the patent: **22.07.2009**
(21) Application number: 06744873.8
(22) Date of filing: 05.05.2006
(51) Int. Cl.: F24J 2/10, F24J 2/38, F24J 2/46, F24J 2/54

(54) **HYPERBOLIC SOLAR TROUGH FIELD SYSTEM**
HYPERBOLISCHES SOLARRINNENFELDSYSTEM
SYSTÈME DE CHAMP DE COLLECTEURS SOLAIRES HYPERBOLIQUES

(43) Date of publication of application: 21.01.2009
(73) Proprietor: Çapan, Rahmi Oguz, 48700 Marmaris (TR)
(72) Inventor: Çapan, Rahmi Oguz, 48700 Marmaris (TR)
(74) Representative: Cayli, Hülya
(86) International application number: PCT/IB2006/051421
(87) International publication number: WO 2007/129146

(56) References cited:
- EP-A- 0 024 177
- WO-A-01/42722
- FR-A1- 2 256 418
- US-A- 205 657
- US-A- 4 119 085
- US-A- 4 505 263
- US-A- 5 002 379
- US-A- 5 851 309
- US-A1- 2003 037 814

## Description

### Technical Field

This invention relates to the hyperbolic trough-shaped collectors which concentrate the sunlight on a focus and convert it into another energy forms such as heat and electricity.

### Prior Art

Currently, trough collectors *(solar trough field system)* are used to collect the sun's energy in order to obtain electricity and heat therefrom. These systems comprise trough-shaped long parabolic reflectors, thermal receiver tubes which are placed on the focus of the reflectors, and where beams coming from the reflector are collected and in which a fluid exists, and a rotating mechanism which directs the reflectors to the position where the sun is. The beams coming to the reflectors which are directed towards the sun reflect and are collected on the thermal receiver tube which is located on the focus of the reflector. Thermal receiver tube is provided with two nested tubes where a vacuum setting is located in the space therebetween. A fluid, which provides the heat transfer, is passed through the inner tube. The outer tube is made of glass. By concentrating the beams coming from the reflectors on the thermal receiver tube, this tube reaches very high temperatures; therefore, the fluid located in the inner tube can be heated. Heat energy can be converted into the electric energy, when desired, with this fluid which reaches high temperatures. However, the factors such as thermal receiver tubes used in these systems being many meters long, said thermal receiver tubes following the sun together with the reflectors, outer parts thereof being made of glass increase their possibility of breaking during operation. In addition, dynamic and static forces which are generated by the wind can cause both reflectors and tubes to break. In order to decrease the breaking of the parabolic reflectors, a truss structure is formed to support the reflectors on their convex sides. However, this structure decreases only the rate of breaking and is not a complete solution for breaking. The vibrations generated as a result of the movement which is made by the system for directing towards the sun can also cause the glass tubes to break. The solar trough field systems which are built on California (USA) by LUZ can be given as an example for these systems. In that system of LUZ, the parabolic reflectors which are many meters long and the thermal receiver tubes which are located on their focus are rotated together. The most fundamental problem of this system is that the thermal receiver tubes which are made of a fragile material are movable. As long as the thermal receiver tubes are movable, they are subjected to more torque load and the flexible hoses are used in the connections of the beginning and ending points of the parabolic reflectors with the fixed tubes. The thermal receiver tubes which are subjected to the torque loads have a higher possibility of breaking. On the other hand, it is clear that the flexible hose connection is not a safe system since the temperature of the fluid which is transferred within the thermal receiver tube is 300-500°C. In addition, it has been obtained from the field observations that the truss structure, which supports the parabolic mirrors, is also weak against the torque and the moment loads acting due to the drive unit of the system and the wind. Because of these loads, the parabolic reflectors are frequently broken, thus causing the operating costs to increase.

Due to the problems encountered in the above-mentioned system of LUZ, a so-called EUROTROUGH project which is supported by the European Union is initiated. In the scope of this project, the lower part of the parabolic reflectors is supported by a truss structure which can resist more against the torque and the moment loads, and there are inflexible movable tubes attached to the rotary joint on the connection points of the movable thermal receiver tubes with the fixed tubes. Although the truss system which is developed with EUROTROUGH is safer than the system of LUZ, it could not strictly eliminate the breaking problem of the parabolic reflectors and the thermal receiver tubes. It has been understood from the field observations that the possibility of breaking the thermal receiver tubes decreases only to some extent since they are movable in this system as well. In addition, it has been also revealed from the field observations that the hot fluid frequently leaks out from these connections of the thermal receiver tubes comprising rotary joint connection points.

Another problem observed with LUZ and EUROTROUGH is that the hydraulic pistons of both systems cannot move with the required accuracy to follow the sun. It is highly difficult and generates an adjustment problem to make an accurate speed control with the hydraulic piston units and provide simultaneous operations of multiple piston units which are used for multiple parabolic reflectors. Additionally, in both systems, while following the sun, continuous displacement of the center of gravity causes more energy consumption to run these systems.

An example of a solar trough field system can be found in published patent application FR 2256418A1 which discloses a system comprising reflectors, in which the beams that come from the sun are concentrated on the focal axis in the bottom part thereof and thermal receiver tubes which extend throughout said focal axis are at a fixed position; the bottom part of said reflector is circular sectioned such that it surrounds the thermal receiver tubes somewhat, and on the continuation, its arms extending towards two sides.

Another linear reflector design is disclosed in WO0142722 which discloses an apparatus for concentrating electromagnetic radiation onto a body capable of absorbing said radiation includes a radiation reflector for reflecting radiation striking the radiation reflector and focusing said radiation onto the body wherein at least a part of the radiation reflector is in the shape of at least a portion of an involute of the body.

A further example of a multiple reflector solar concentrator is disclosed in US2003/037814A1 which is concerned with an arrangement of optical elements for the collection of light.

With the invention, the solar trough field systems with hyperbolic reflector are explained as an alternative to the solar trough field systems with parabolic reflectors in the inventive solar trough field systems with hyperbolic reflector, the sun's energy is used through keeping the reflectors fixed at three different positions in the east, azimuth axis and west directions.

In this invention, the solar troughs with hyperbolic reflector rotating around a fixed thermal receiver tube are used. The hyperbolic reflectors focus the beams coming from a range of 60 degrees from the sun on a thermal receiver tube placed into the focus of a hyperbola, which is located at the bottom point thereof. Therefore, the necessity to direct all hyperbolic reflectors, which are many meters long, with the same accuracy towards the sun is eliminated. Besides, using multiple motor units with lesser capacity instead of a single motor unit which has sufficient capacity to rotate all reflectors in the system, entire system stoppage is prevented even if some of the motors fail. In addition, in order to decrease the maintenance and replacement expenses which will occur in case of breaking the hyperbolic reflectors and more importantly, decrease the manufacturing cost significantly, it is considered, to use multi-piece hyperbolic reflectors instead of single-piece parabolic reflectors. Owing to the multi-piece hyperbolic structure, even if some reflector parts are broken, the system can continue to run without suffering too much efficiency loss.

In addition to these, with some changes made on the thermal receiver tube in the collector system as an alternative, the efficiency is ensured to increase. The developments made in this point are related to the use of heat transfer fins within the thermal receiver tubes. On the other hand, an advantage obtained from keeping the thermal receiver tubes fixed is the direct steam generation. Some difficulties are encountered during the direct steam generation in the thermal receiver tubes with flexible hose connection or rotary joint connection which are used in the prior art, and the generated steam leaks.out to external environment from said connection points.

### Aim of the invention

An aim of the invention is to form a hyperbolic solar trough field system in which the beams coming from the sun parallel and at angles which change at a fixed rate of 15 degrees per hour throughout the day are concentrated on the focal axis in the bottom part of the hyperbolic reflector that can rotate around this focal axis, and also comprising the thermal receiver tubes which are at a fixed position, extend throughout said focal axis.

Another aim of the invention is to build a hyperbolic solar trough system which is directed towards the sun only by waiting at three positions using the hyperbolic reflectors instead of forming a reflector which is continuously moving. Thus, it is to ensure that the necessity for the movement of the reflector to be fast and accurate at that time is eliminated owing to the beam collection feature of the reflector from a range of 60 degrees.

Also, another aim of the invention is to decrease the maintenance and replacement expenses which will arise in case of breaking the reflectors used as single-piece and to ensure the use of multi-piece hyperbolic reflectors instead of single-piece ones in order to prevent the system from suffering too much efficiency loss even if some reflector parts are broken.

Another aim of the invention is to provide an efficiency increase by using heat fins in the thermal receiver tubes.

Also, another aim of the invention is to ensure that the reflectors are positioned using motors with lesser capacity instead of a single motor unit which has sufficient capacity to rotate all reflectors, and the entire reflector system continues to run even if some of the motors fail.

### Description of the Drawings

The hyperbolic solar trough field system is shown in the attached drawings, wherein:
Fig. 1 is a side view of the subject matter of invention solar trough field system with hyperbolic reflector.
Fig. 2 is a side view of the hyperbolic reflector's position facing towards the east direction.
Fig. 3 is a side view of the hyperbolic reflector's position which is parallel to the azimuth axis.
Fig. 4 is a side view of the hyperbolic reflector's position facing towards the west direction.
Fig. 5 is a multi-piece side view of the hyperbolic reflector in the solar trough field system with hyperbolic reflector.
Fig. 6 is a side view of the solar trough field system with hyperbolic reflector along with the drive and support units.
Fig. 7 is a front view of the solar trough field system with dual-stage hyperbolic reflector along with the lock mechanisms.
Fig. 8 is a side view of the solar trough field system with dual-stage hyperbolic reflector.
Fig. 9 is a side view of the dual-stage hyperbolic reflector's position facing towards the east direction.
Fig. 10 is a side view of the dual-stage hyperbolic reflector's position which is parallel to the azimuth axis.
Fig. 11 is a side view of the dual-stage hyperbolic reflector's position facing towards the west direction.
Fig. 12 is a multi-piece side view of the hyperbolic reflector in the solar trough field system with dual-stage hyperbolic reflector.
Fig. 13 is a side view of the solar trough field system with dual-stage hyperbolic reflector along with the drive and support units.
Fig. 14 is a front view of the solar trough field system with dual-stage hyperbolic reflector along with the lock mechanisms.

The parts in the figures are numbered one by one and the corresponding terms of these numbers are given below.
Hyperbolic solar trough field system (B)
Hyperbolic solar trough field system (H)
Hyperbolic reflector (20)
Hyperbolic reflector (20m)
Hyperbola form (20m', 20m")
Thermal receiver tube (21)
Rotary joint (22)
Side supports (23, 23')
Pistons (24, 24')
Azimuth locks (25a, 25a')
East lock (25d)
West lock (25b)
Guy wires (26, 26')
Pulleys (27, 27')
Reflector connections (28)
Support ring (29)
Lightweight Filling Material (30)

### Disclosure of Invention

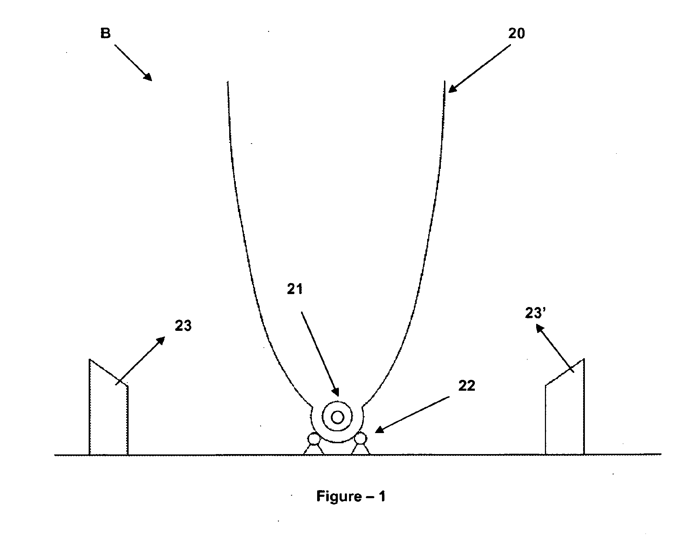

Fig. 1 provides a side view of, the subject matter of invention, hyperbolic solar trough field system (B). Said hyperbolic solar trough field system (B) comprises hyperbolic reflectors (20) in which the beams that come from the sun parallel and the angle of incident thereof changes at a fixed rate of 15 degrees per hour throughout the day are concentrated on the focal axis in the bottom part thereof, thermal receiver tubes (21) which extend throughout said focal axis and are at a fixed position, and side supports (23, 23') which are at a ground-fixed position on the both sides of the reflector (20). The reflectors (20) are connected to the ground from at least one rotary joint (22) point such that said reflectors (20) can rotate around the central axis of the thermal receiver tubes (21). The bottom part of said hyperbolic reflector (20) has been formed as circular sectioned such that it surrounds the thermal receiver tubes (21) somewhat, on the continuation; a hyperbola form has been given to its arms extending towards two sides. In this way, the beams coming from the sun parallel and at varying degrees reflect from the inner surface of the hyperbolic reflector (20) and concentrate on the thermal receiver tubes (21), and the concentration of the light coming onto the tube (21) is increased, thus ensuring the more efficient operation of the hyperbolic solar trough field system (B).

The hyperbolic reflector (20) which is contained in said system (B) has a structure which is able to focus the beams coming from a range of approximately 60 degrees from the sun onto the thermal receiver tubes which are located at the bottom part thereof. By means of said system (B), non-imaging type light concentration is generated on the thermal receiver tubes.

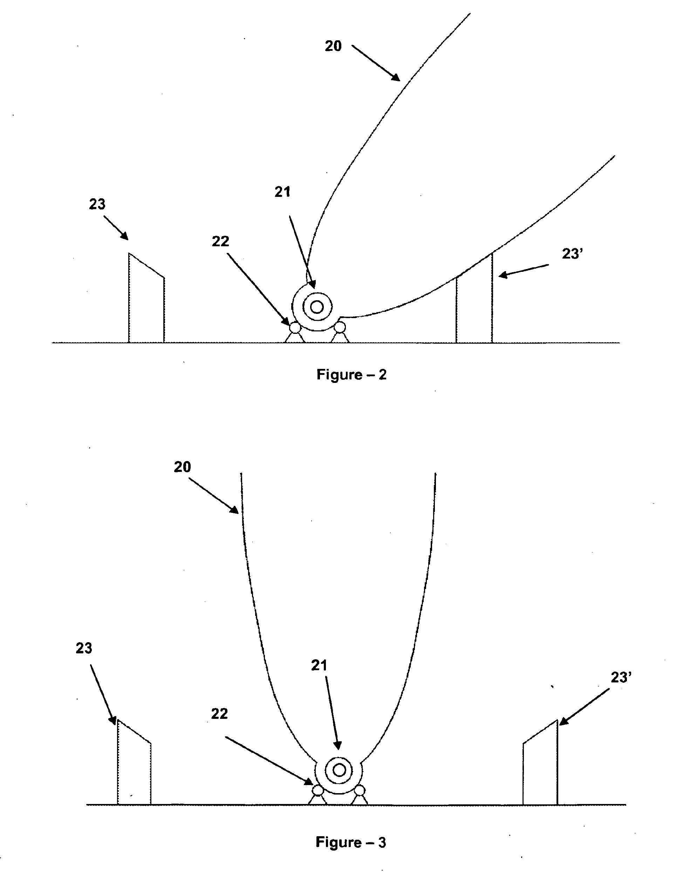

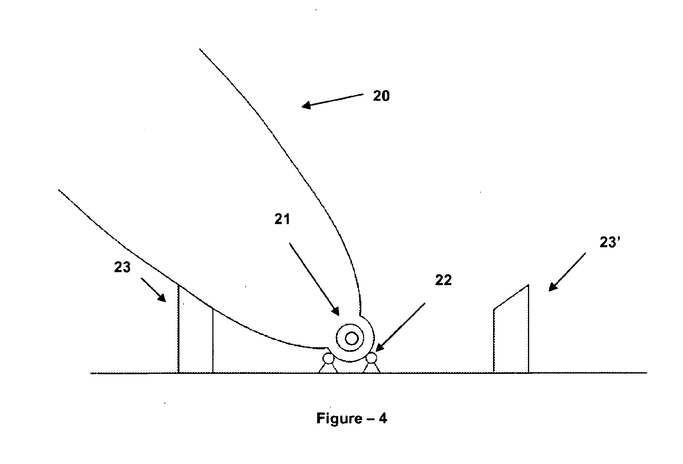

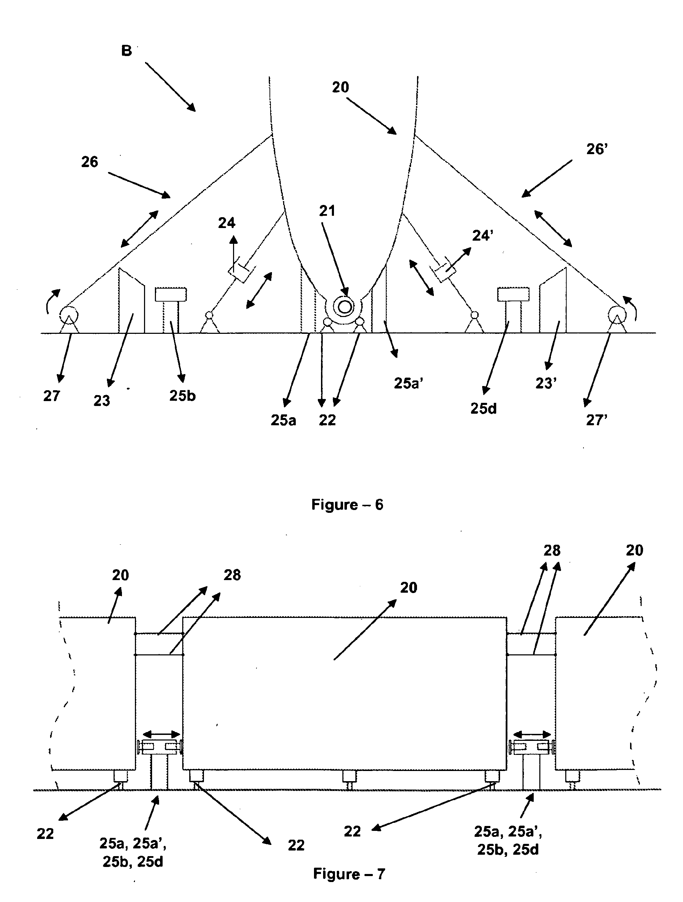

Since said hyperbolic reflector (20) is connected to the ground from its bottom part with the rotary joints (22), the reflector (20) can be directed towards the sun by rotating with the use of any drive mechanism which is associated with these joints (22) and/or reflectors (20). Considering that there is a route of movement of approximately 180 degrees between sunrise and sunset, the hyperbolic reflector (20) remains at a fixed position, as in the demonstration in fig. 2, on the side support (23') in the east direction during the time to reach the zenith angle of approximately 60 degrees after sunrise. While the sun continues its travel towards the apex point of the elliptic route that it follows after completing the zenith angle of approximately 60 degrees, the hyperbolic reflector (20) is rotated and brought into a position where it is parallel to the azimuth axis - the axis which combines the earth plane and the apex point also known as zenith point and is perpendicular to the earth plane. Due to the beam collection feature of said reflector (20) from a range of 60 degrees, the movement of the reflector does not have to be fast and accurate at that time; there is a sufficiently long time interval to reach the parallel position with the azimuth axis. This position is shown in fig. 3. To keep the hyperbolic reflector (20) in this position, different lock mechanisms (fig. 7) can be used. After the sun's zenith angle sweeping of approximately 120 degrees, the hyperbolic reflector (20) is rotated to the west direction again and is changed this time to a fixed position on the side support (23) in the west direction. After the sun completes the zenith angle of approximately 120 degrees, the hyperbolic reflector (20) is kept in the west direction as also shown in fig. 4 during the time to sunset point. Following the sunset, the hyperbolic reflector (20) are brought back to its initial position through re-rotating towards the east direction -there is a long time like all night for this operation- and positioning on the side support (23') in the east direction. In cases where the geographical regions in which the said system (B) is used are different, e.g. in cases where these systems (B) are located below or above the sea level, or surrounded by heights; the movement angle of the sun on the earth all day may be relatively different. In other words, the sun can sweep a more or less angle than the movement route of 180 degrees as mentioned above. In these cases, the heights of the side supports (23, 23') might also be different according to the characteristics of the geographies in which the said systems (B) are used. In such cases, the apertures of the hyperbolic reflectors (20) and the heights of the side supports (23, 23') can be adjusted such that they divide the route that sun follows into three equal parts. For example, considering the movement route of 180 degrees and that the sun rises from a level of 0 degree and declines from a level of 180 degrees as mentioned above, the aperture of the reflectors (20) can be adjusted such that it will collect the beams coming from a range of 60 degrees and the heights of the side supports (23, 23') can be adjusted such that they will direct the reflectors (20) to an axis of 30 degrees from the horizon when the reflectors (20) are seated thereon.

Since the reflectors (20) in the hyperbolic solar trough field system (B) collect the sunlight from a range of approximately 60 degrees and thus are located only in three positions in a day, the necessity for reflectors (20) to move synchronously with each other during position change is eliminated. Thus, accurate and continuous sun tracking is not needed, and there is no need for the complex electronic control units and programs which are necessary for this tracking. This critical consideration decreases not only the design, manufacturing and maintenance expenses substantially but also simplifies the operation equally.

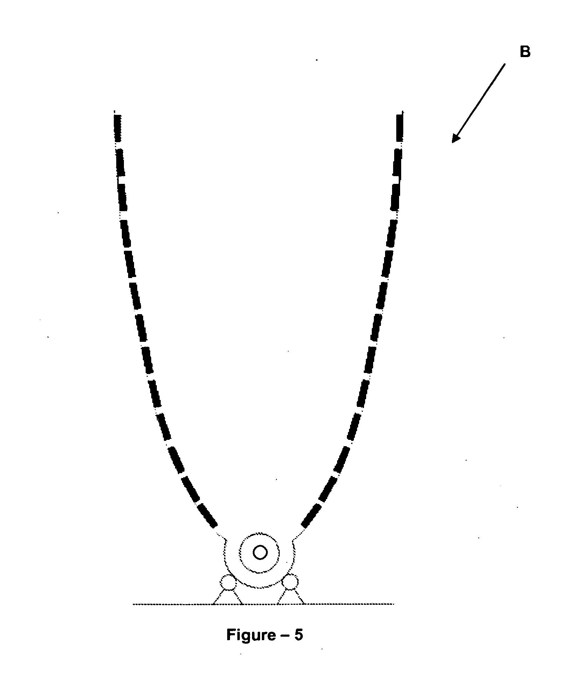

Besides the sun tracking activity with continuous and accurate movement through the said system (B) decreases the production, maintenance and repair costs of the system (B), the multi-piece reflectors may also be used in order to decrease the costs arising from the single-piece hyperbolic reflector manufacturing. Fig. 5 provides a multi-piece side view of the hyperbolic reflector in the hyperbolic solar trough field system (B). By means of the invention, instead of single-piece ones, longitudinal multi-piece hyperbolic reflectors can also be used alternatively. By means of this multi-piece structure, even if some reflector parts are broken, it is easy to change them. In addition, the breaking of single-piece reflectors due to the external effects can damage the substantial part of the reflectors. By means of multi-piece structure, only the reflectors which remain under the effect are broken, and the possibility of damage to entire hyperbola decreases. In addition, maintenance and replacement expenses, which may arise when the hyperbolic reflectors are broken, decrease and even if some reflector parts are broken, the system can continue to run without suffering too much efficiency loss. In the multi-piece hyperbolic reflectors, the edge width of those which are close to the center of the hyperbola is narrow and the width of these reflector parts increases towards the sides of the hyperbola. The surfaces of the multi-piece hyperbolic reflectors which face towards the thermal receiver tubes can be produced in two different ways. The first alternative is to make these surfaces planar. The reflectors which are placed on the concave surfaces of this hyperbolic solar trough are placed on this trough such that they reflect the light coming onto their flat surfaces to the thermal receiver tube. The second alternative is that said surfaces of these multi-piece reflectors are each in the form of a hyperbola section. In other words, said multi-piece reflector is made of bringing the longitudinal sections of a single hyperbolic reflector together. When said hyperbola sectioned reflectors are positioned longitudinally and collaterally on the concave surface of a hyperbolic solar trough again, a multi-piece hyperbolic reflector system, where the focal point of each is the thermal receiver tube, is produced. In the said system (B), if the flat-surface reflector parts which are proposed as the first alternative are used, each flat panel should be narrow in width and therefore the number of panels used should be too many in order to allow a better focusing. If the multi-piece reflectors made of hyperbolic sections which are proposed in the second alternative are used, it is possible to use less reflector parts since each reflector width is wider than the flat-surface ones. Since both alternatives have their own advantages, a selection can be made between these two alternatives according to the manufacturing capacity. Owing to their flat surfaces, manufacturing of the reflector parts mentioned in the first alternative is easier than the manufacturing of the hyperbolic sectioned reflector parts. Besides, although the manufacturing of the hyperbolic sectioned reflectors are more difficult, they focus the sunlight better.

Fig. 6 provides a side view of the said hyperbolic solar trough field system (B) along with the drive and support units. In order to rotate the hyperbolic reflectors (20) around a pivot point, different drive mechanisms can be used. These mechanisms can be in the form of motor-reducer units or chain-gear or belt-pulley arrangements which are attached to these units and additionally in the form of drive arms. These said mechanisms (not shown in the figures) can be attached to the rotary joints (22) or the hyperbolic reflector (20). By means of these mechanisms, the hyperbolic reflectors (20) can be rotated around the focal axis. By the invention, it is preferred to position the reflectors using multiple motors with less capacity. In this way, by using multiple motors instead of a single motor unit which has sufficient capacity to rotate all reflectors, it is aimed that the entire reflector system continues to run even if some of the motors fail.

Another example of the drive mechanisms may be hydraulic or pneumatic pistons (24, 24') as shown in fig. 6. It is possible to position the reflectors (20) in the east - west direction with the help of the pistons (24, 24') of which one ends are connected to the sides of the hyperbolic reflectors (20) and other ends are connected to a fixed point. Or the reflectors (20) can be positioned with the help of the guy wires (26, 26') of which one ends are connected to the side of the reflectors (20) and other ends are each connected to one pulley (27, 27'). During the use of guy wires (26, 26') as the drive system, the length of these wires (26, 26') can be adjusted according to the rotation of the pulleys rotated by individual drive units.

In the said hyperbolic solar trough field system (B), the lock mechanisms (25a, 25a', 25b, 25d) can also be used in order to protect the hyperbolic reflectors (20) from the wind loads and reduce the oscillation amount when they are at a fixed position. Owing to these mechanisms which are positioned on the beginning and ending parts of the hyperbolic reflectors (20), when the reflectors are changed to the fixed position in the east, azimuth axis and west directions, the arms of the lock mechanisms move in the north-south direction and support the reflector (20) in its fixed positions. When the reflectors (20) are changed to the east position, they are kept fixed between the side supports (23') and the east locks (25d). When the reflectors (20) are changed to the parallel position to the azimuth axis, they are kept fixed between the azimuth locks (25a, 25a'). When the reflectors (20) are changed to the west position, they are kept fixed between the side supports (23) and the west locks (25b). Fig. 7 provides a front view of the hyperbolic reflectors (20) along with the lock mechanisms (25a, 25a', 25b, 25d). When the reflectors (20) are desired to be kept in a fixed position, the movable arms in the lock mechanisms move in the north-south direction and lock the reflectors (20); when the reflectors (20) are required to change the position, they move again in the north-south direction and release the reflectors. In case where the multiple hyperbolic reflectors (20) are used, the reflector connections (28) shown in fig. 7 are used as a connection member between the reflectors (20) in order to connect each reflector (20) to each other and thus allow them to move together. The positions of the reflector connections (28) are at the top parts of the reflectors (20) such that they do not strike the lock mechanisms (25a, 25a', 25b, 25d).

Different alternatives can be applied for the thermal receiver tubes (21) which are used in the hyperbolic solar trough field system (B). In the first alternative, the thermal receiver tube (21) consists of two tubes which are nested, concentric with each other and have a vacuum space therebetween. A fluid is passed through the inner tube, which is called transfer tube, with high thermal conductivity for the heat transfer. Outer glass tube allows the beams coming from the hyperbolic reflectors to reach directly the transfer tube. The temperature of the transfer tube and the fluid therein increases in this way. In order to avoid heat loss through convection from transfer tube to outside, a vacuum space is created between the glass tube and the transfer tube.

In the second alternative, unlike the previous thermal receiver tube, this tube is made of glass and the heat fins with high thermal conductivity are used therein in order to heat the fluid passing through this tube more quickly. As well as, said heat fins may be the fins which are in the form of a plate; they may be used in the form of pins as well. Plate-shaped fins provide manufacturing and mounting easiness compared to pin-shaped fins. Since the pin-shaped ones cast a less shadow on one another, they are more efficient than the plate-shaped ones. It is possible to use both fin structures in this system (B). In the second alternative, it is required to use a second glass tube on the outer parts of the suitable thermal receiver tubes such that a vacuum space will be between said glass tube and the inner tube. The heat fins which are suitable for the second alternative are located longitudinally inside the glass tube and integrally with this tube.

Since the thermal receiver tube (21) is somewhat surrounded by the hyperbolic reflector (20) in the hyperbolic solar trough field system (B), it is less affected by the external environment conditions. Therefore, since the outer glass tube is not preferred in the thermal receiver tube (21) which is suitable for the above-mentioned first alternative, there is no need to perform the operations such as combining the glass tubes which are many meters long, creating a vacuum space, providing tightness; and there arises an opportunity to save money on the issues such as material, workmanship, maintenance, repair owing to the absence of these glass tubes which are the most fragile components of the system even if they are in a fixed position.

The above preferred hyperbolic solar trough field systems (B) are not intended to limit the protection scope of the invention. According to the information described with the invention, the modifications to be performed on this preferred hyperbolic solar trough field systems (B) should be evaluated within the protection scope of the invention.

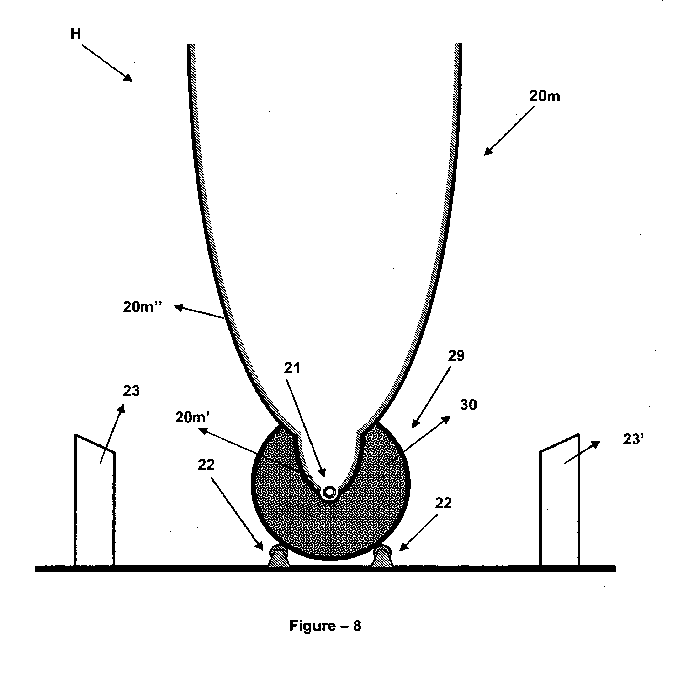

Figs. 7-14 show an alternative hyperbolic solar trough field system (H). The hyperbolic solar trough field system (H) of which side view is provided in fig. 7 comprises hyperbolic reflectors (20m) in which the beams that come from the sun parallel and the angle of incident thereof changes at a fixed rate of 15 degrees per hour throughout the day are concentrated on the focal axis in the bottom part thereof, thermal receiver tubes (21) which extend throughout said focal axis and are at a fixed position, and side supports (23, 23') which are at a ground-fixed position on the both sides of the reflector. The reflectors (20m) are connected to the ground from at least one rotary joint (22) point such that said reflectors can rotate around the central axis of the thermal receiver tubes (21). The bottom part of said hyperbolic reflector (20m) has been produced as circular sectioned such that it surrounds the thermal receiver tubes (21) somewhat, on the continuation; a hyperbola form (20m') has been given to its arms extending towards two sides. A bigger hyperbolic structure (20m") which starts from the point where said hyperbola form (20m') finishes and extends towards both sides is generated again in the form of a hyperbola. The hyperbolic reflector (20m) comprising dual-stage hyperbolas (20m', 20m") is formed such that firstly the beams coming from the sun parallel and at varying degrees reflect from the inner surface of the big hyperbolic form (20m") and reach the inner surface of the small hyperbola form by passing through the aperture of the small hyperbolic form (20m') and then are concentrated on the thermal receiver tubes (21) by reflecting therefrom. The intended use of the dual-stage hyperbolas (20m', 20m") is to ensure the more efficient operation of the hyperbolic solar trough field system (H) by concentrating the beams coming from the sun more on the tube (21). Thus, the problem concerning the concentration of the sunlight on the thermal receiver tubes is reduced with the enlarged hyperbolic reflectors (20m). The aperture of the small hyperbola form (20m') mentioned herein is equal to the focus area of the big hyperbola form (20m"). Therefore, this small hyperbola form (20m') re-concentrates the light focused by the big hyperbola form (20m") so as to be collected in its bottom.

The hyperbolic reflector (20m) which is contained in said system (H) has a structure which is able to focus the beams coming from a range of approximately 60 degrees from the sun onto the thermal receiver tubes which are located at the bottom part thereof. With the said system (H), non-imaging type light concentration is generated on the thermal receiver tubes.

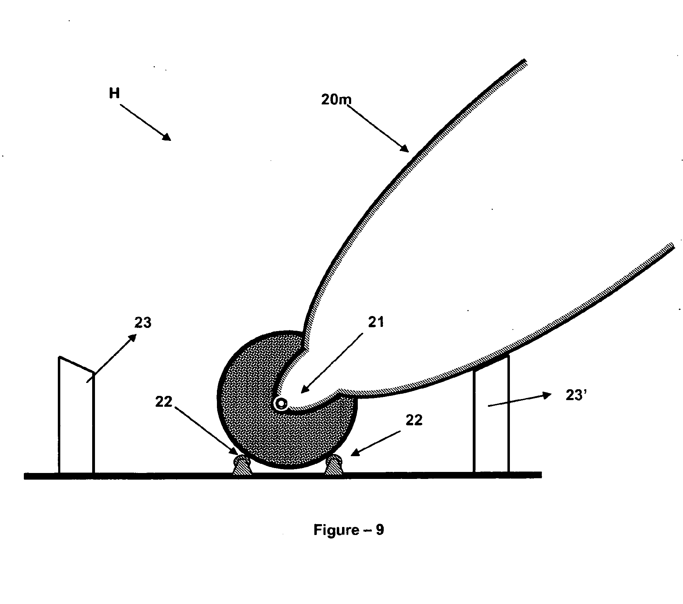

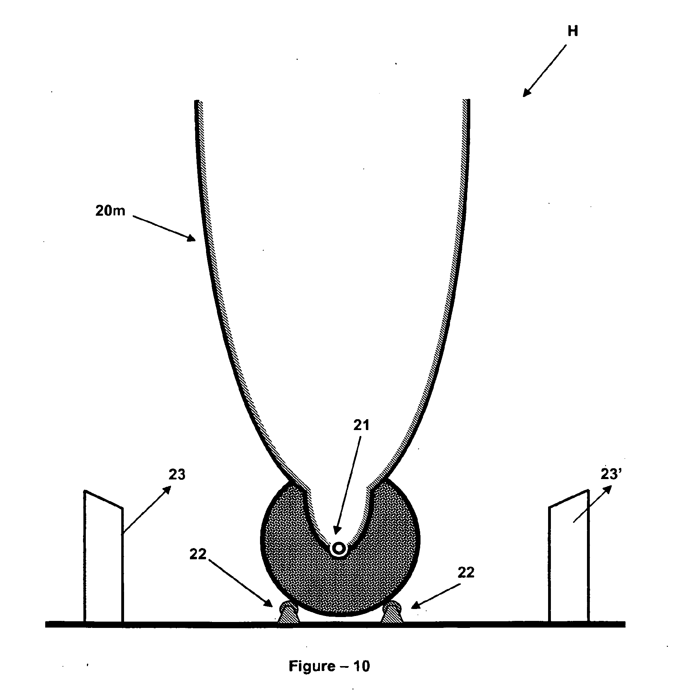

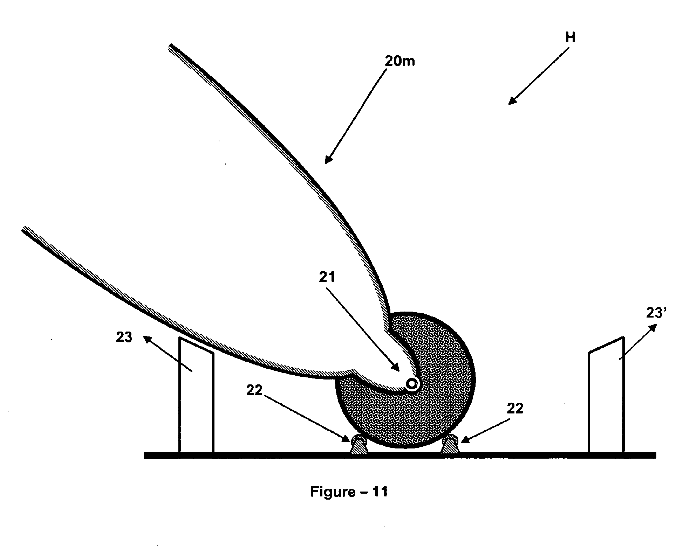

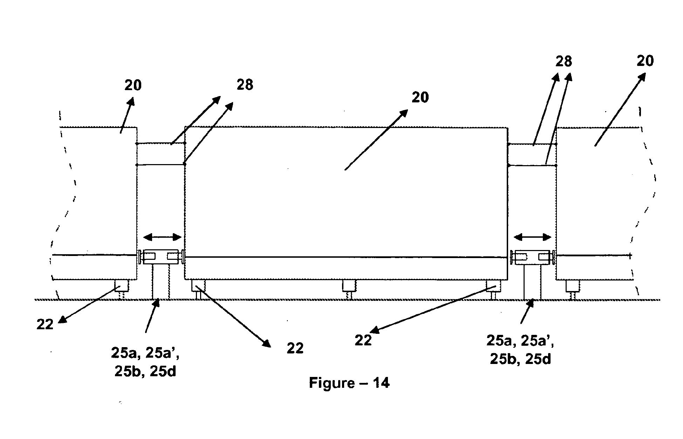

Since said hyperbolic reflector (20m) is connected to the ground from its bottom part with the rotary joints (22), the reflector (20m) can be directed towards the sun by rotating with the use of any drive mechanism which is associated with these joints (22) and/or reflectors (20m). Considering that there is a route of movement of approximately 180 degrees between sunrise and sunset, the hyperbolic reflector (20m) remains at a fixed position, as in the demonstration in fig. 9, on the side support (23') in the east direction during the time to reach the zenith angle of approximately 60 degrees after sunrise. While the sun continues its travel towards the apex point of the elliptic route that it follows after completing the zenith angle of approximately 60 degrees, the hyperbolic reflector (20m) is rotated and brought into a position where it is parallel to the azimuth axis. Due to the beam collection feature of said reflector (20m) from a range of 60 degrees, the movement of the reflector does not have to be fast and accurate at that time; there is a sufficiently long time interval to reach the parallel position with the azimuth axis. This position is shown in fig. 10. To keep the hyperbolic reflector (20m) in this position, different lock mechanisms (fig. 14) can be used. After the sun's zenith angle sweeping of approximately 120 degrees, the hyperbolic reflector (20m) is rotated to the west direction again and is changed this time to a fixed position on the side support (23) in the west direction. After the sun completes the zenith angle of approximately 120 degrees, the hyperbolic reflector (20) is kept in the west direction as also shown in fig. 11 during the time to sunset point. Following the sunset, the hyperbolic reflector (20m) are brought back to its initial position through re-rotating towards the east direction - there is a long time like all night for this operation- and positioning on the side support (23') in the east direction. In cases where the geographical regions in which the said system (H) is used are different, e.g. in cases where these systems (H) are located below or above the sea level, or surrounded by heights; the movement angle of the sun on the earth all day may be relatively different. In other words, the sun can sweep a more or less angle than the movement route of 180 degrees as mentioned above. In these cases, the heights of the side supports (23, 23') might also be different according to the characteristics of the geographies in which said systems (H) are used. In such cases, the apertures of the hyperbolic reflectors (20m) and the heights of the side supports (23, 23') can be adjusted such that they divide the route that sun follows into three equal parts. For example, considering the movement route of 180 degrees and that the sun rises from a level of 0 degree and declines from a level of 180 degrees as mentioned above, the aperture of the reflectors (20m) can be adjusted such that it will collect the beams coming from a range of 60 degrees and the heights of the side supports (23, 23') can be adjusted such that they will direct the reflectors (20m) to an axis of 30 degrees from the horizon when the reflectors (20m) are seated thereon.

In an embodiment of the subject matter of the invention of hyperbolic solar trough field system (H), a support ring (29) was installed on the bottom part of the hyperbolic reflector (20m). Above-mentioned thermal receiver tubes (21) are located on the central axis of the support ring (29). The system (H) rotates around this axis which is also the focal axis of the reflectors (20m). In the hyperbolic solar trough field system (H), the support rings (29) are supported from their bottom parts through rotary joints (22) and rotate on the rotary joints (22) by sliding. The rotary joints (22) were installed below the support rings (29) such that they allow the rings (29) to rotate around their center. In addition, the strength of the system (H) is increased by using a lightweight filling material between the support ring (29) and the hyperbolic reflector (20m).

Since the reflectors (20m) in the hyperbolic solar trough field system (H) collect the sunlight from a range of approximately 60 degrees and thus are located only in three positions in a day, the necessity for reflectors (20m) to move synchronously with each other during position change is eliminated. Thus, accurate and continuous sun tracking is not needed, and there is no need for the complex electronic control units and programs which are necessary for this tracking. This critical consideration decreases not only the design, manufacturing and maintenance expenses substantially but also simplifies the operation equally.

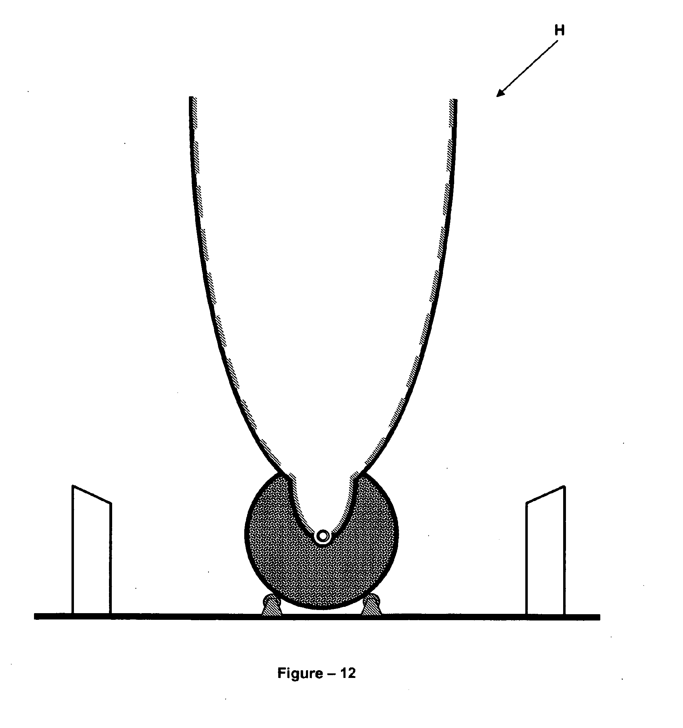

Although the sun tracking activity with continuous and accurate movement through the said system (H) decreases the production, maintenance and repair costs of the system (H), the multi-piece reflectors may also be used in order to decrease the costs arising from the single-piece hyperbolic reflector manufacturing. Fig. 12 provides a multi-piece side view of the hyperbolic reflector in the hyperbolic solar trough field system (H). By means of the invention, instead of single-piece ones, longitudinal multi-piece hyperbolic reflectors can also be used alternatively. By means of this multi-piece structure, even if some reflector parts are broken, it is easy to change them. In addition, the breaking of single-piece reflectors due to the external effects can damage the substantial part of the reflectors. By means of multi-piece structure, only the reflectors which remain under the effect are broken, and the possibility of damage to entire hyperbola decreases. In addition, maintenance and replacement expenses, which may arise when the hyperbolic reflectors are broken, decrease and even if some reflector parts are broken, the system can continue to run without suffering too much efficiency loss. In the multi-piece hyperbolic reflectors, the edge width of those which are close to the center of the hyperbola is narrow and the width of these reflector parts increases towards the sides of the hyperbola. The surfaces of the multi-piece hyperbolic reflectors which face towards the thermal receiver tubes can be produced in two different ways. The first alternative is to make these surfaces planar. The reflectors which are placed on the concave surfaces of this hyperbolic solar trough are placed on this trough such that they reflect the light coming onto their flat surfaces to the thermal receiver tube. The second alternative is that said surfaces of these multi-piece reflectors are each in the form of a hyperbola section. In other words, said multi-piece reflector is made of bringing the longitudinal sections of a single hyperbolic reflector together. When said hyperbola sectioned reflectors are positioned longitudinally and collaterally on the concave surface of a hyperbolic solar trough again, a multi-piece hyperbolic reflector system, where the focal point of each is the thermal receiver tube, is produced. In said system (H), if the flat-surface reflector parts are used which are proposed as the first alternative, each flat panel should be narrow in width and therefore the number of panels used should be too many in order to allow a better focusing. If the multi-piece reflectors made of hyperbolic sections which are proposed in the second alternative are used, it is possible to use less reflector parts since each reflector width is wider than the flat-surface ones. Since both alternatives have their own advantages, a selection can be made between these two alternatives according to the manufacturing capacity. Owing to their flat surfaces, manufacturing of the reflector parts mentioned in the first alternative is easier than the manufacturing of the hyperbolic sectioned reflector parts. Besides, although the manufacturing of the hyperbolic sectioned reflectors are more difficult, they focus the sunlight better.

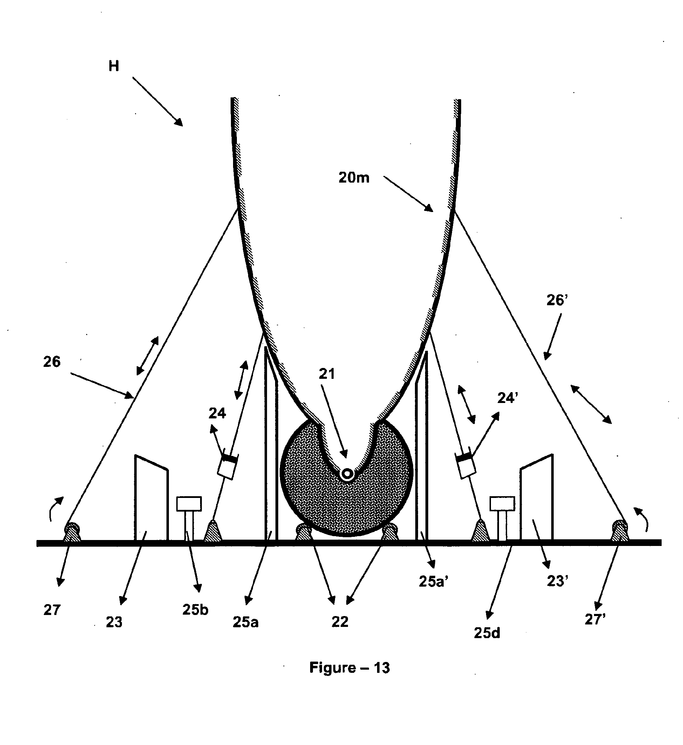

Fig. 13 provides a side view of the hyperbolic solar trough field system (H) along with the drive and support units. In order to rotate the hyperbolic reflectors (20m) around a pivot point, different drive mechanisms can be used. These mechanisms can be in the form of motor-reducer units or chain-gear or belt-pulley arrangements which are attached to these units and additionally in the form of drive arms. These said mechanisms (not shown in the figures) can be attached to the rotary joints (22) or the hyperbolic reflector (20m). By means of these mechanisms, the hyperbolic reflectors (20m) can be rotated around the focal axis. With the invention, it is preferred to position the reflectors using multiple motors with less capacity. In this way, using multiple motors instead of a single motor unit which has sufficient capacity to rotate all reflectors, it is aimed that the entire reflector system continues to run even if some of the motors fail.

Another example of the drive mechanisms may be hydraulic or pneumatic pistons (24, 24') as shown in fig. 13. It is possible to position the reflectors (20m) in the east
- west direction with the help of the pistons (24, 24') of which one ends are connected to the sides of the hyperbolic reflectors (20m) and other ends are connected to a fixed point. Or the reflectors (20m) can be positioned with the help of the guy wires (26, 26') of which one ends are connected to the side of the reflectors (20m) and other ends are each connected to one pulley (27, 27'). During the use of guy wires (26, 26') as the drive system, the length of these wires (26, 26') can be adjusted according to the rotation of the pulleys rotated by individual drive units.

In the hyperbolic solar trough field system (H), the lock mechanisms (25a, 25a', 25b, 25d) can also be used in order to protect the hyperbolic reflectors (20m) from the wind loads and reduce the oscillation amount when they are at a fixed position. Owing to these mechanisms which are positioned on the beginning and ending parts of the hyperbolic reflectors (20m), when the reflectors are changed to the fixed position in the east, azimuth axis and west directions, the arms of the lock mechanisms move in the north-south direction and support the reflector (20m) in its fixed positions. When the reflectors (20m) are changed to the east position, they are kept fixed between the side supports (23') and the east locks (25d). When the reflectors (20m) are changed to the parallel position to the azimuth axis, they are kept fixed between the azimuth locks (25a, 25a'). When the reflectors (20m) are changed to the west position, they are kept fixed between the side supports (23) and the west locks (25b). Fig. 14 provides a front view of the hyperbolic reflectors (20m) along with the lock mechanisms (25a, 25a', 25b, 25d). When the reflectors (20m) are required to be kept in a fixed position, the movable arms in the lock mechanisms move in the north-south direction and lock the reflectors (20m); when the reflectors (20m) change the position, they move again in the north-south direction and release the reflectors. In case where the multiple hyperbolic reflectors (20m) are used, the reflector connections (28) shown in fig. 14 are used as a connection member between the reflectors (20m) in order to connect each reflector (20m) to each other and thus allow them to move together. The positions of the reflector connections (28) are at the top parts of the reflectors (20m) such that they do not strike the lock mechanisms (25a, 25a', 25b, 25d).

Different alternatives can be applied for the thermal receiver tubes (21) which are used in hyperbolic solar trough field system (H). In the first alternative, the thermal receiver tube (21) consists of two tubes which are nested, concentric with each other and have a vacuum space therebetween. A fluid is passed through the inner tube, which is called transfer tube, with high thermal conductivity for the heat transfer. Outer glass tube allows the beams coming from the hyperbolic reflectors to reach directly the transfer tube. The temperature of the transfer tube and the fluid therein increases in this way. In order to avoid heat loss through convection from transfer tube to outside, a vacuum space is created between the glass tube and the transfer tube.

In the second alternative, unlike the previous thermal receiver tube, this tube is made of glass and the heat fins with high thermal conductivity are used therein in order to heat the fluid passing through this tube more quickly. Said heat fins may be the fins which are in the form of a plate; however they may be used in the form of pins as well. Plate-shaped fins provide manufacturing and mounting easiness compared to pin-shaped fins. Since the pin-shaped ones cast a less shadow on one another, they are more efficient than the plate-shaped ones. It is possible to use both fin structures in this system (H). In the second alternative, it is required to use a second glass tube on the outer parts of the suitable thermal receiver tubes such that a vacuum space will be between said glass tube and the inner tube. The heat fins which are suitable for the second alternative are located longitudinally inside the glass tube and integrally with this tube.

Since the thermal receiver tube (21) is somewhat surrounded by the hyperbolic reflector (20m) in the hyperbolic solar trough field system (H), it is less affected by the external environment conditions. Therefore, since the outer glass tube is not preferred in the thermal receiver tube (21) which is suitable for the above-mentioned first alternative, there is no need to perform the operations such as combining the glass tubes which are many meters long, creating a vacuum space, providing tightness; and there arises an opportunity to save money on the issues such as material, workmanship, maintenance, repair owing to the absence of these glass tubes which are the most fragile components of the system even if they are in a fixed position.

The above preferred hyperbolic solar trough field systems (H) are not intended to limit the protection scope of the invention. According to the information described with the invention, the modifications to be performed on this preferred hyperbolic solar trough field systems (H) should be evaluated within the protection scope of the invention.

## Claims

1. A hyperbolic solar trough field system (B), comprising hyperbolic reflectors (20) in which the beams that come from the sun parallel and the angles of incident light hereof change throughout the day are concentrated on the focal axis in the bottom part thereof and thermal receiver tubes (21) which extend throughout said focal axis and are at a fixed position,
the bottom part of said hyperbolic reflectors (20) is circular sectioned such that it surrounds the thermal receiver tubes (21) somewhat, and on the continuation, its arms extending towards two sides ; said system is **characterized in that** said arms are in the form of hyperbola; it comprises at least one rotary joint (22) which is used to allow the reflectors (20) to rotate around the central axis of the thermal receiver tubes (21) and are connected to the bottom part of the reflectors (20) and the ground, and the side supports (23, 23') which are at a ground-fixed position on the both sides of the reflectors (20);
the apertures of the hyperbolic reflectors (20) and the heights of the side supports (23, 23') are such that they collect the beams from one third part of the route that the sun follows and the reflectors (20) could be directed towards the sun in three different positions such that they could face
to the east direction, the apex point of the elliptic route that the sun follows and the west direction; and
the hyperbolic reflectors (20) have a structure which is able to focus the beams, coming from a range which constitutes one third part of the route that the sun follows, on the thermal receiver tubes which are located at the bottom part thereof.

2. A hyperbolic solar trough field system (H), comprising hyperbolic reflectors (20m) in which the beams that come from the sun parallel and the angles of incident light thereof change throughout the day are concentrated on the focal axis in the bottom part thereof and thermal receiver tubes (21) which extend throughout said focal axis and are at a fixed position,
the bottom part of said hyperbolic reflectors (20m) is circular sectioned such that it surrounds the thermal receiver tubes (21) somewhat, and on the continuation; its arms extending towards two sides; said system is **characterized in that** said arms are in the form of hyperbola (20m'); there is a bigger hyperbolic structure (20m"), also in the form of a hyperbola, which starts from the point where said hyperbola form (20m') finishes and extends towards both sides; in order to ensure the more efficient operation of the hyperbolic solar trough field system (H) by concentrating the beams coming from the sun more on the tube (21) and to reduce the problem concerning the concentration of the sunlight on the thermal receiver tubes with the enlarged hyperbolic reflectors (20m); the hyperbolic reflectors (20m) comprising dual-stage hyperbolas (20m', 20m") are such that firstly the beams coming from the sun parallel and at varying degrees reflect from the inner surface of the big hyperbolic form (20m") and reach the inner surface of the small hyperbola form by passing through the aperture of the small hyperbolic form (20m') and then are concentrated on the thermal receiver tubes (21) by reflecting therefrom;
it comprises at least one rotary joint (22) which is used to allow the reflectors (20m) to rotate around the central axis of the thermal receiver tubes (21) and are connected to the bottom part of the reflectors (20m) and the ground; and
the hyperbolic reflector (20m) has a structure which is able to focus the beams coming from a range which constitutes one third part of the route that the sun follows on the thermal receiver tubes which are located at the bottom part thereof.

3. A hyperbolic solar trough field system (B, H) according to Claims 1 or 2, wherein drive mechanisms which are associated with the joints (22) and/or reflectors (20, 20m) are used, in order to rotate and direct the reflectors (20, 20m) towards the sun.

4. A hyperbolic solar trough field system (B, H) according to Claims 1 or 2, wherein the hyperbolic reflectors (20, 20m) are at a fixed position on the side support (23') in the east direction during the time to reach the first third part of the total zenith angle that it will sweep after sunrise; while the sun continues its travel towards the apex point of the elliptic route that it follows after completing said one third part approximately, the hyperbolic reflectors (20, 20m) are rotated and brought into a position where it is parallel to the azimuth axis; after the sun sweeps the second third part of the total zenith angle that it will sweep approximately, the hyperbolic reflectors (20, 20m) are rotated to the west direction again and is changed this time to a fixed position on the side support (23) in the west direction; following the sunset, the hyperbolic reflectors(20, 20m) are brought back to its initial position through re-rotating towards the east direction and positioning on the side support (23') in the east direction.

5. A hyperbolic solar trough field system (B, H) according to Claims 1 or 2, wherein longitudinal multi-piece flat glass mirror reflectors which have higher reflection efficiency than curved glass mirrors are used in order to reduce the cost arising from the manufacturing of single-piece hyperbolic reflectors (20, 20m) and change the broken ones easily if some of the reflectors are broken.

6. A hyperbolic solar trough field system (B, H) according to Claim 5, wherein the surfaces of the multi-piece hyperbolic reflectors which face towards the thermal receiver tubes (21) are flat, the reflector parts which are placed on the concave surfaces of a hyperbolic solar trough are placed on this trough such that they reflect the light coming onto their flat surfaces to the thermal receiver tube (21) and the edge width of the multi-piece hyperbolic reflectors parts which are close to the center of the hyperbola is narrow and the width of these reflector parts increases towards the sides of the hyperbola.

7. A hyperbolic solar trough field system (B, H) according to Claims 1 or 2, wherein the drive mechanisms, which are used to rotate the hyperbolic reflectors (20, 20m) around their focal axis, can be motor-reducer units, chain-gear arrangements connected to the motor-reducer units, belt-pulley arrangements connected to the motor-reducer units, drive arms connected to the motor-reducer units, hydraulic pistons or pneumatic pistons (24, 24').

8. A hyperbolic solar trough field system (B, H) according to Claims 1 or 2, wherein multiple motor units with lesser capacity, instead of a single motor unit which has sufficient capacity to rotate all reflectors (20, 20m), are used.

9. A hyperbolic solar trough field system (B, H) according to Claims 1 or 2, wherein it comprises lock mechanisms (25a, 25a', 25b, 25d) which are positioned on the beginning and ending parts of the hyperbolic reflectors (20, 20m) in order to protect them from the wind loads and reduce the oscillation amount when the hyperbolic reflectors (20, 20m) are changed to the fixed position in the east, azimuth axis and west directions, and support the reflector (20, 20m) in its fixed positions by the arms thereof moving in the north-south direction or are opened by the arms thereof moving in the north-south direction again when the reflectors (20, 20m) have to move.

10. A hyperbolic solar trough field system (B, H) according to Claims 1 or 2, wherein the thermal receiver tube (21) is comprised of two tubes which are nested, concentric with each other and have a vacuum space therebetween; the inner tube is in the form of a tube with high thermal conductivity through which a fluid is passed for the heat transfer; the outer tube is in the form of a glass tube which allows the beams coming from the hyperbolic reflector to reach directly the inner tube.

11. A hyperbolic solar trough field system (H) according to Claim 2, wherein it comprises side supports (23, 23') which are at a ground-fixed position on both sides of the reflectors (20m).

12. A hyperbolic solar trough field system (H) according to Claim 2, wherein the apertures of the hyperbolic reflectors (20m) and the heights of the side supports (23, 23') are such that they collect the beams from one third part of the route that the sun follows and the reflectors (20m) are directed towards the sun in three different positions such that they face to the east direction, the apex point of the elliptic route that the sun follows and the west direction.

13. A hyperbolic solar trough field system (H) according to Claim 2, wherein in order to re-concentrate the light focused by the big hyperbola form (20m") so as to be collected in bottom part of the small hyperbola form (20m'), the aperture of the small hyperbola form (20m') is equal to the focus area of the big hyperbola form (20m").

14. A hyperbolic solar trough field system (H) according to Claim 2, wherein it comprises support rings (29) which are installed on the bottom part of the hyperbolic reflector (20m), the rotary joints (22) which are installed below the support rings (29) such that they allow the rings (29) to rotate around their center and the thermal receiver tubes (21) which are located on the central axis of the support rings (29) which is also the focal axis of the reflectors (20m).

## Patentansprüche

1. Hyperbolisches Solarrinnenfeldsystem (B), das hyperbolische Reflektoren (20), in welchen die Strahlen, die parallel von der Sonne kommen, und die Winkel des von dieser einfallenden Lichts, die sich über den Tag verändern, auf der Brennachse in ihrem unteren Teil konzentriert werden, und Wärmeaufnehmerrohre (21) aufweist, die sich über die gesamte Brennachse erstrecken und sich an einer feststehenden Position befinden,
der untere Teil der hyperbolischen Reflektoren (20) einen kreisförmigen Querschnitt hat, dergestalt, dass er die Wärmeaufnehmerrohre(21) ein wenig umschließt und sich in der Verlängerung seine Arme zu zwei Seiten hin erstrecken, wobei das System **dadurch gekennzeichnet ist, dass** die Arme in Form einer Hyperbel sind:
es mindestens ein Drehgelenk (22), das dazu verwendet wird, die Reflektoren (20) sich um die Mittelachse der Wärmeaufnehmerrohre (21) drehen zu lassen, die am unteren Teil der Reflektoren (20) und am Untergrund befestigt sind, und Seitenstützen (23, 23') aufweist, die sich auf einer am Untergrund befestigten Position auf beiden Seiten der Reflektoren (20) befinden;
die Öffnungen der hyperbolischen Reflektoren (20) und die Höhen der Seitenstützen (23, 23') dergestalt sind, dass sie die Strahlen von einem Drittel der Bahn, die die Sonne verfolgt, auffangen, und die Reflektoren (20) in drei verschiedenen Positionen so zur Sonne hin gerichtet werden können, dass sie der Ostrichtung, dem Scheitelpunkt der elliptischen Bahn, die die Sonne verfolgt, und der Westrichtung zugewandt sein können; und
die hyperbolischen Reflektoren (20) einen Aufbau haben, der in der Lage ist, die Strahlen, die aus einem Bereich kommen, der ein Drittel des Wegs darstellt, den die Sonne verfolgt, auf die Wärmeaufnehmerrohre zu fokussieren, die an ihrem unteren Teil angeordnet sind.

2. Hyperbolisches Solarrinnenfeldsystem (H), das hyperbolische Reflektoren (20m), in welchen die Strahlen, die parallel von der Sonne kommen, und die Winkel des von dieser einfallenden Lichts, die sich über den Tag verändern, auf der Brennachse in ihrem unteren Teil konzentriert werden, und Wärmeaufnehmerrohre (21) aufweist, die sich über die gesamte Brennachse erstrecken und sich an einer feststehenden Position befinden,
der untere Teil der hyperbolischen Reflektoren (20m) einen kreisförmigen Querschnitt hat, dergestalt, dass er die Wärmeaufnehmerrohre(21) ein wenig umschließt und sich in der Verlängerung seine Arme zu zwei Seiten hin erstrecken, wobei das System **dadurch gekennzeichnet ist, dass** die Arme in Form einer Hyperbel (20m')sind;
eine größere hyperbolische Struktur (20m"), auch in der Form einer Hyperbel, vorhanden ist, die von dem Punkt ab beginnt, an dem die Hyperbelform (20m') endet und sich zu beiden Seiten hin erstreckt;
um einen effizienteren Betrieb des hyperbolischen Solarrinnenfeldsystems (H) sicherzustellen, indem die von der Sonne kommenden Strahlen mehr auf das Rohr (21) konzentriert werden, und um das Problem zu verringern, das die Konzentration des Sonnenlichts an den Wärmeaufnehmerrohren mit den vergrößerten hyperbolischen Reflektoren (20m) betrifft: die hyperbolischen Reflektoren (20m), die zweistufige Hyperbeln (20m', 20m") umfassen, dergestalt sind, dass zuerst die Strahlen, die parallel und mit sich verändernden Graden von der Sonne kommen, von der Innenfläche der großen Hyperbelform (20m") reflektiert werden und die Innenfläche der kleinen Hyperbelform erreichen, wobei sie durch die Öffnung der kleinen Hyperbelform (20m') hindurchtreten und dann, indem sie von dieser reflektiert werden, an den Wärmeaufnehmerrohren (21) konzentriert werden;
es mindestens ein Drehgelenk (22) aufweist, das dazu verwendet wird, die Reflektoren (20m) sich um die Mittelachse der Wärmeaufnehmerrohre (21) drehen zu lassen, und das/die Drehgelenk/e am unteren Teil der Reflektoren (20m) und am Untergrund befestigt ist/sind;
der hyperbolische Reflektor (20m) einen Aufbau hat, der in der Lage ist, die Strahlen, die aus einem Bereich kommen, der ein Drittel der Bahn darstellt, die die Sonne verfolgt, auf die Wärmeaufnehmerrohre zu fokussieren, die an seinem unteren Teil angeordnet sind.

3. Hyperbolisches Solarrinnenfeldsystem (B, H) nach Anspruch 1 oder 2, wobei Antriebsmechanismen, die mit den Gelenken (22) und/oder Reflektoren (20, 20m) verbunden sind, verwendet werden, um die Reflektoren (20, 20m) zu drehen und zur Sonne hin auszurichten.

4. Hyperbolisches Solarrinnenfeldsystem (B, H) nach Anspruch 1 oder 2, wobei die hyperbolischen Reflektoren (20, 20m) während der Zeit, zu der das erste Drittel des gesamten Zenitwinkels, der nach Sonnenaufgang überstrichen wird, erreicht wird, sich an einer feststehenden Position an der Seitenstütze (23') in der Ostrichtung befinden; während die Sonne ihren Weg zum Scheitelpunkt der elliptischen Bahn fortsetzt, die sie verfolgt, nachdem das eine Drittel in etwa abgeschlossen ist, die hyperbolischen Reflektoren (20, 20m) gedreht und in eine Position versetzt werden, in der sie parallel zur Azimuthachse sind; nachdem die Sonne das zweite Drittel des gesamten Zenitwinkels überstrichen hat, der in etwa überstrichen wird, die hyperbolischen Reflektoren (20, 20m) wieder in die Westrichtung gedreht und dabei in eine feststehende Position an der Seitenstütze (23) in der Westrichtung versetzt werden; nach Sonnenuntergang die hyperbolischen Reflektoren (20, 20m) in ihre Ausgangsposition zurückversetzt werden, indem sie in die Ostrichtung zurückgedreht und an der Seitenstütze (23') in der Ostrichtung positioniert werden.

5. Hyperbolisches Solarrinnenfeldsystem (B, H) nach Anspruch 1 oder 2, wobei längsverlaufende, mehrteilige, flache Glasspiegelreflektoren, die über einen höheren Reflexionswirkungsgrad verfügen als gekrümmte Glasspiegel, verwendet werden, um die Kosten zu senken, die sich aus der Herstellung einteiliger hyperbolischer Reflektoren (20, 20m) ergeben, und um zu Bruch gegangene Reflektoren mühelos auszutauschen, falls einige von diesen zu Bruch gegangen sind.

6. Hyperbolisches Solarrinnenfeldsystem (B, H) nach Anspruch 5, wobei die den Wärmeaufnehmerrohren (21) zugewandten Oberflächen der mehrteiligen hyperbolischen Reflektoren flach sind, die Reflektorteile, die auf den konkaven Oberflächen einer hyperbolischen Solarrinne sitzen, so auf diese Rinne gesetzt sind, dass sie das auf ihre flachen Oberflächen fallende Licht zum Wärmeaufnehmerrohr (21) reflektieren, und die Kantenbreite der mehrteiligen hyperbolischen Reflektorteile, die nahe an der Mitte der Hyperbel liegen, schmal ist, und die Breite dieser Reflektorteile zu den Seiten der Hyperbel hin zunimmt.

7. Hyperbolisches Solarrinnenfeldsystem (B, H) nach Anspruch 1 oder 2, wobei es sich bei den Antriebsmechanismen, die dazu verwendet werden, um die hyperbolischen Reflektoren (20, 20m) um ihre Brennachse zu drehen, um Getriebemotoreinheiten, Kettenantriebsanordnungen, die an die Getriebemotoreinheiten angeschlossen sind, Riemenantriebsanordnungen, die an die Getriebemotoreinheiten angeschlossen sind, Antriebsarme, die an die Getriebemotoreinheiten angeschlossen sind, hydraulische Kolben oder pneumatische Kolben (24, 24') handeln kann,

8. Hyperbolisches Solarrinnenfeldsystem (B, H) nach Anspruch 1 oder 2, wobei mehrere Motoreinheiten mit geringerer Kapazität anstelle einer einzigen Motoreinheit, die über ausreichend Kapazität verfügt, um alle Reflektoren (20, 20m) zu drehen, verwendet werden.

9. Hyperbolisches Solarrinnenfeldsystem (B, H) nach Anspruch 1 oder 2, wobei es Arretierungsmechanismen (25a, 25a', 25b, 25d) umfasst, die an den Anfangs-und Endteilen der hyperbolischen Reflektoren (20, 20m) positioniert sind, um sie vor den Windbelastungen zu schützen und den Schwingungsbetrag zu senken, wenn die hyperbolischen Reflektoren (20, 20m) in der Ost-, Azimutachsen- und Westrichtung in die feststehende Position versetzt werden, und den Reflektor in seinen feststehenden Positionen stützen, indem sich ihre Arme in die Nord-Süd-Richtung bewegen, oder geöffnet werden, indem sich ihre Arme wieder in die Nord-Süd-Richtung bewegen, wenn sich die Reflektoren (20, 20m) bewegen sollen.

10. Hyperbolisches Solarrinnenfeldsystem (B, H) nach Anspruch 1 oder 2, wobei sich das Wärmeaufnehmerrohr (21) aus zwei Rohren zusammensetzt, die ineinander gesteckt sind, zueinander konzentrisch sind, und einen luftleeren Raum zwischen sich besitzen; das innere Rohr in Form eines Rohrs mit hoher Wärmeleitfähigkeit vorliegt, durch welches ein Fluid zur Wärmeübertragung geleitet wird; das äußere Rohr in Form eines Glasrohrs vorliegt, das die vom hyperbolischen Reflektor kommenden Strahlen das innere Rohr direkt erreichen lässt.

11. Hyperbolisches Solarrinnenfeldsystem (H) nach Anspruch 2, wobei es Seitenstützen (23, 23') aufweist, die sich in einer auf dem Untergrund befestigten Position auf beiden Seiten der Reflektoren (20m) befinden.

12. Hyperbolisches Solarrinnenfeldsystem (H) nach Anspruch 2, wobei die Öffnungen der hyperbolischen Reflektoren (20m) und die Höhen der Seitenstützen (23, 23') dergestalt sind, dass sie die Strahlen von einem Drittel der Bahn, die die Sonne verfolgt, auffangen, und die Reflektoren (20m) in drei verschiedenen Positionen so zur Sonne hin gerichtet sind, dass sie der Ostrichtung, dem Scheitelpunkt der elliptischen Bahn, die die Sonne verfolgt, und der Westrichtung zugewandt sind.

13. Hyperbolisches Solarrinnenfeldsystem (H) nach Anspruch 2, wobei, um das durch die große Hyperbelform (20m") fokussierte Licht erneut zu konzentrieren, damit es im unteren Teil der kleineren Hyperbelform (20m') aufgefangen wird, die Öffnung der kleinen Hyperbelform (20m') gleich der Brennfläche der großen Hyperbelform (20m") ist.

14. Hyperbolisches Solarrinnenfeldsystem (H) nach Anspruch 2, wobei es Stützringe (29), die am unteren Teil des hyperbolischen Reflektors (20m) installiert sind, die Drehgelenke (22), die so unter den Stützringen (29) installiert sind, dass sie die Ringe (29) sich um ihre Mitte drehen lassen, und die Wärmeaufnehmerrohre (21) aufweist, die auf der Mittelachse der Stützringe (29) angeordnet sind, bei der es sich auch um die Brennachse der Reflektoren (20m) handelt.

## Revendications

1. Système de champ de capteurs solaires hyperboliques (B), comprenant des réflecteurs hyperboliques (20) dans lesquels les rayons qui proviennent du soleil en parallèle et les angles de la lumière incidente de ces derniers changent au cours de la journée, sont concentrés sur l'axe focal dans la partie inférieure de ceux-ci ; et des tubes récepteurs thermiques (21) qui s'étendent à travers ledit axe focal et qui sont dans une position fixe,
la partie inférieure desdits réflecteurs hyperboliques (20) est de coupe circulaire, de manière à entourer dans une certaine mesure les tubes récepteurs thermiques (21), et dans le prolongement, leurs bras s'étendant vers deux côtés ; ledit système est **caractérisé en ce que** lesdits bras sont en forme d'hyperbole ;
il comprend au moins un joint rotatif (22) qui est utilisé pour permettre aux réflecteurs (20) de tourner autour de l'axe central des tubes récepteurs thermiques (21), et sont reliés à la partie inférieure des réflecteurs (20) et au sol, et les supports latéraux (23, 23') qui sont situés des deux côtés des réflecteurs (20) dans une position fixe au sol ;
les ouvertures des réflecteurs hyperboliques (20) et les hauteurs des supports latéraux (23, 23') sont telles qu'ils recueillent les rayons issus d'un tiers du parcours suivi par le soleil, et les réflecteurs (20) pourraient être orientés vers le soleil dans trois positions différentes de manière à pouvoir être orientés vers la direction est, le sommet du parcours elliptique suivi par le soleil et la direction ouest ; et
les réflecteurs hyperboliques (20) ont une structure permettant de concentrer les rayons issus d'une étendue qui constitue un tiers du parcours suivi par le soleil, sur les tubes récepteurs thermiques qui sont situés au niveau de la partie inférieure de ceux-ci.

2. Système de champ de capteurs solaires hyperboliques (H) comprenant des réflecteurs hyperboliques (20m) dans lesquels les rayons qui proviennent du soleil en parallèle et les angles de la lumière incidente de ces derniers changent au cours de la journée, sont concentrés sur l'axe focal dans la partie inférieure de ceux-ci ; et des tubes récepteurs thermiques (21) qui s'étendent à travers ledit axe focal et qui sont dans une position fixe, **caractérisé en ce que**
la partie inférieure desdits réflecteurs hyperboliques (20m) est de coupe circulaire, de manière à entourer dans une certaine mesure les tubes récepteurs thermiques (21), et dans le prolongement, leurs bras s'étendant vers deux côtés, ledit système est **caractérisé en ce que** lesdits bras sont en forme d'hyperbole (20m') : il existe une structure hyperbolique plus grande (20m") également en forme d'hyperbole, qui part du point où ladite forme d'hyperbole (20m') se termine et s'étend vers les deux côtés :
afin d'assurer un fonctionnement plus efficace du système de champ de capteurs solaires hyperboliques (H) en concentrant les rayons du soleil sur le tube (21) et de réduire le problème concernant la concentration de la lumière du soleil sur les tubes récepteurs thermiques avec les réflecteurs hyperboliques agrandis (20m) ; les réflecteurs hyperboliques (20m) comprenant des hyperboles à deux étages (20m', 20m") sont configurés de telle sorte que dans un premier temps les rayons qui proviennent du soleil en parallèle et à des degrés variés sont réfléchis par la surface interne de la grande forme d'hyperbole (20m") et atteignent la surface interne de la petite forme d'hyperbole en traversant l'ouverture de la petite forme d'hyperbole (20m'), pour être ensuite concentrés sur les tubes récepteurs thermiques (21) par réflexion à partir de celle-ci ;
il comprend au moins un joint rotatif (22) qui est utilisé pour permettre aux réflecteurs (20m) de tourner autour de l'axe central des tubes récepteurs thermiques (21), et sont reliés à la partie inférieure des réflecteurs (20m) et au sol ; et
le réflecteur hyperbolique (20m) a une structure permettant de concentrer les rayons issus d'une étendue qui constitue un tiers du parcours suivi par le soleil sur les tubes récepteurs thermiques qui sont situés au niveau de la partie inférieure de celui-ci.

3. Système de champ de capteurs solaires hyperboliques (B, H) selon les revendications 1 ou 2, dans lequel des mécanismes d'entraînement associés aux joints (22) et/ou aux réflecteurs (20, 20m) sont utilisés afin d'entraîner en rotation les réflecteurs (20, 20m) et de les orienter vers le soleil.

4. Système de champ de capteurs solaires hyperboliques (B, H) selon les revendications 1 ou 2, dans lequel les réflecteurs hyperboliques (20, 20m) sont dans une position fixe sur le support latéral (23') dans la direction est pendant le temps nécessaire pour atteindre le premier tiers de la distance zénithale totale parcourue après le lever du soleil ; tandis que le soleil poursuit son trajet vers le sommet du parcours elliptique qu'il suit après avoir approximativement achevé ledit tiers, les réflecteurs hyperboliques (20, 20m) sont entraînés en rotation et amenés dans une position dans laquelle ils sont parallèles à l'axe azimutal ; après que le soleil a parcouru le second tiers de la distance zénithale totale qu'il doit approximativement parcourir, les réflecteurs hyperboliques (20, 20m) sont entraînés en rotation pour être de nouveau orientés vers l'ouest et passent désormais à une position fixe sur le support latéral (23) dans la direction ouest ; après le coucher du soleil, les réflecteurs hyperboliques (20, 20m) sont ramenés à leur position initiale par un nouvel entraînement en rotation dans la direction est et un positionnement sur le support latéral (23') dans la direction est.

5. Système de champ de capteurs solaires hyperboliques (B, H) selon les revendications 1 ou 2, dans lequel des réflecteurs miroirs plans longitudinaux à pièces multiples qui ont une plus grande efficacité de réflexion que les miroirs incurvés sont utilisés pour réduire le coût de fabrication de réflecteurs hyperboliques à une seule pièce (20, 20m) et pour pouvoir être remplacés facilement si certains des réflecteurs sont brisés.

6. Système de champ de capteurs solaires hyperboliques (B, H) selon la revendication 5, dans lequel les surfaces des réflecteurs hyperboliques à pièces multiples qui sont orientées vers les tubes récepteurs thermiques (21) sont planes, les parties de réflecteur disposées sur les surfaces concaves d'un capteur solaire hyperbolique sont positionnées sur ledit capteur de manière à réfléchir la lumière atteignant leurs surfaces planes vers le tube récepteur thermique (21) et la largeur au bord des parties des réflecteurs hyperboliques à pièces multiples qui sont proches du centre de l'hyperbole est réduite, et la largeur de ces parties de réflecteur augmente vers les côtés de l'hyperbole.

7. Système de champ de capteurs solaires hyperboliques (B, H) selon les revendications 1 ou 2, dans lequel les mécanismes d'entraînement qui sont utilisés pour entraîner en rotation les réflecteurs hyperboliques (20, 20m) autour de leur axe focal peuvent être des unités à motoréducteur, des dispositifs à engrenage à chaîne reliés aux unités à motoréducteur, des dispositifs à poulie et courroie reliés aux unités à motoréducteur, des bras d'entraînement reliés aux unités à motoréducteur, des vérins hydrauliques ou des vérins pneumatiques (24, 24').

8. Système de champ de capteurs solaires hyperboliques (B, H) selon les revendications 1 ou 2, dans lequel des unités à moteurs multiples à capacité réduite sont utilisées à la place d'une unité à moteur unique ayant une capacité suffisante pour entraîner en rotation tous les réflecteurs (20, 20m).

9. Système de champ de capteurs solaires hyperboliques (B, H) selon les revendications 1 ou 2, comprenant des mécanismes de verrouillage (25a, 25a', 25b, 25d) qui sont positionnés sur les parties initiales et terminales des réflecteurs hyperboliques (20, 20m) afin de les protéger des charges du vent et de réduire l'oscillation quand les réflecteurs hyperboliques (20, 20m) sont déplacés vers la position fixe dans les directions est, de l'axe azimutal et ouest, et supportent le réflecteur (20, 20m) dans ses positions fixes par le déplacement de leurs bras dans la direction nord-sud, ou sont ouverts par le nouveau déplacement de leurs bras dans la direction nord-sud quand les réflecteurs (20, 20m) doivent être déplacés.

10. Système de champ de capteurs solaires hyperboliques (3, H) selon les revendications 1 ou 2, dans lequel le tube récepteur thermique (21) comprend deux tubes qui sont logés l'un dans l'autre de manière concentrique et qui sont espacés par un vide ; le tube interne a la forme d'un tube à haute conductivité thermique, à travers lequel un fluide est acheminé en vue du transfert thermique ; le tube externe a la forme d'un tube en verre qui permet aux rayons issus du réflecteur hyperbolique d'atteindre directement le tube interne.

11. Système de champ de capteurs solaires hyperboliques (H) selon la revendication 2, comprenant des supports latéraux (23, 23') qui sont dans une position fixe au sol sur les deux côtés des réflecteurs (20m).

12. Système de champ de capteurs solaires hyperboliques (H) selon la revendication 2, dans lequel les ouvertures des réflecteurs hyperboliques (20m) et les hauteurs des supports latéraux (23, 23') sont telles qu'ils recueillent les rayons issus d'un tiers du parcours suivi par le soleil, et les réflecteurs (20m) sont orientés vers le soleil dans trois positions différentes de manière à pouvoir être orientés vers la direction est, le sommet du parcours elliptique suivi par le soleil et la direction ouest.

13. Système de champ de capteurs solaires hyperboliques (H) selon la revendication 2, dans lequel, afin de concentrer de nouveau la lumière concentrée par la grande forme d'hyperbole (20m") afin qu'elle soit recueillie dans la partie inférieure de la petite forme d'hyperbole (20m'), l'ouverture de la petite forme d'hyperbole (20m') est égale à l'aire focale de la grande forme d'hyperbole (20m").

14. Système de champ de capteurs solaires hyperboliques (H) selon la revendication 2, comprenant des anneaux de support (29) qui sont installés dans la partie inférieure du réflecteur hyperbolique (20m), les joints rotatifs (22) qui sont installés en dessous des anneaux de support (29) de manière à permettre aux anneaux (29) de tourner autour de leur centre, et les tubes récepteurs thermiques (21) qui sont disposés sur l'axe central des anneaux de support (29) qui est aussi l'axe focal des réflecteurs (20m).
